# FASCICULE DE BREVET EUROPEEN

(11) **EP 0 514 245 B1**
(45) Date de publication et mention de la délivrance du brevet: **27.08.1997**
(21) Numéro de dépôt: 92401277.6
(22) Date de dépôt: 07.05.1992
(51) Int. Cl.: C08L 27/06, C08L 23/04, C08L 23/12, C08L 23/02

(54) **Compositions à base de polymère de chlorure de vinyle et de polyoléfine à propriétés rhéologiques améliorées leur procédé de synthèse et leur utilisation**
Zusammensetzungen auf Basis von Vinylchloridpolymer und von Polyolefin mit verbesserten rheologischen Eigenschaften, ihr Syntheseverfahren und ihre Anwendung
Compositions based on vinyl chloride polymer and polyolefin with improved rheological properties, their procedure of synthesis and their application

(30) Priorité: 16.05.1991 FR 9105954
(43) Date de publication de la demande: 19.11.1992
(73) Titulaire: ELF ATOCHEM S.A., 92800 Puteaux (FR)
(72) Inventeur: Galvez, Jean-Marc, B-1160 Bruxelles (BE); Renouard, Philippe, F-27800 Brionne (FR)

(56) Documents cités:
- EP-A- 0 255 757
- EP-A- 0 317 680

## Description

La présente invention concerne des compositions renfermant essentiellement un polymère de chlorure de vinyle (PVC) et une polyoléfine pour des applications qui nécessitent des propriétés rhéologiques et de résistance au feu compatibles avec la préparation d'objets moulés, par exemple, boîtiers, couvercles, châssis utilisés dans le domaine de la bureautique.

Les technologies de mise en oeuvre de ces compositions sont celles habituellement employées, par exemple : extrusion, extrusion soufflage, calandrage, thermoformage, injection moulage et autres. Ces technologies nécessitent de disposer de composition de fluidité à chaud suffisante.

Pour la préparation desdits objets moulés, on a recours à des résines polymériques ayant des propriétés mécaniques performantes et possédant intrinsèquement une résistance au feu élevée.

Le PVC est reconnu comme un excellent matériau à cet égard. Cependant, ce polymère présente un certain nombre d'inconvénients, notamment une faible aptitude à être injecté lorsque ses valeurs de fluidité K sont comprises entre 54 et 70.

Il est nécessaire d'utiliser des presses à injecter munies de vis ayant des profils très spécifiques qui sont de nature à freiner le développement des objets susmentionnés qui sont moulés sur des presses standards.

Pour palier à cet inconvénient, on a réalisé des mélanges de PVC avec divers polymères thermoplastiques, notamment avec des polyoléfines susceptibles d'abaisser la viscosité de fusion du PVC et, par conséquent faciliter la mise en oeuvre des mélanges ainsi obtenus notamment par injection moulage.

Bien que les mélanges obtenus présentent une viscosité de fusion convenable pour l'application des technologies de mise en oeuvre précitées, la compatibilité de leurs constituants est réduite. L'adhésion entre la phase dispersée et la matrice est mauvaise et on observe lors de la transformation de ces mélanges un abaissement notable des propriétés mécaniques et un délaminage qui sont rédhibitoires pour les utilisations envisagées.

Il a maintenant été trouvé une composition à base de polymère de chlorure de vinyle et de polyoléfine ayant une viscosité de fusion améliorée, présentant une excellente adhésion entre la matrice et la phase dispersée, caractérisée en ce qu'elle comprend au moins un polymère de chlorure de vinyle, au moins une polyoléfine et au moins un terpolymère d'α-monooléfine greffé pour du chlorure de vinyle.

De préférence la composition selon l'invention comprend :
- de 1 à 100 parties en poids de polymère de chlorure de vinyle,
- de 1 à 100 parties en poids de polyoléfine,
- de 1 à 30 parties en poids de terpolymère d'α-monooléfine greffé par du chlorure de vinyle,
décrit dans la demande de brevet européen n° 317680 et constitué par un terpolymère tronc comprenant :
- 51 à 96% en poids d'éthylène,
- 3 à 40% en poids d'un acrylate ou méthacrylate d'alkyle ayant de 1 à 8 atomes de carbone, et
- 1 à 9% en poids d'un anhydride de diacide carboxylique insaturé et d'un

greffon essentiellement constitué par un homo- ou copolymère du chlorure de vinyle. La quantité de comonomère polymérisable avec le chlorure de vinyle étant au plus égale à 25% en poids. Comme comonomères polymérisables avec le chlorure de vinyle utilisables on peut citer l'acétate de vinyle, l'éthylène et le propylène

La proportion du terpolymère tronc dans le terpolymère greffé est au moins égale à 2% et au plus égale à 98% et de préférence compris entre 60 et 95%.

Les acrylates ou méthacrylates d'alkyle préférés sont l'acrylate d'éthyle et le méthacrylate d'éthyle.

Les anhydrides de diacide carboxylique insaturés préférés sont l'anhydride maléïque, l'anhydride itaconique, l'anhydride citraconique, et tout particulièrement l'anhydride maléïque.

Par polymère de chlorure de vinyle (PVC) on désigne présentement tous les homo et copolymères de chlorure de vinyle obtenus par polymérisation en masse, en suspension, en émulsion, en microsuspension ou en émulsion suspendue. La différence entre les produits résidant essentiellement dans la granulométrie, le diamètre moyen des grains pouvant s'échelonner de 130 µm dans le cas d'un PVC obtenu par polymérisation en masse à 20 µm dans le cas d'un PVC obtenu par polymérisation en émulsion ou en microsuspension.

A titre d'exemple de monomères copolymérisables avec le chlorure de vinyle, on peut citer l'acétate de vinyle, le chlorure de vinylidène, l'acrylonitrile, le trifluorochloroéthylène et/ou les esters des acides acrylique, fumarique, maléique et/ou itaconique.

Supplémentairement, le polychlorure de vinyle peut être chloré et contenir une teneur en chlore en poids, au plus égale à 70%.

Parmi ces PVC, l'invention concerne tout particulièrement les homopolymères du chlorure de vinyle obtenus par polymérisation en masse ou en suspension et présentant un KW au plus égal à 70 et de préférence compris entre 54 et 65.

Par polyoléfine, on désigne présentement tous les homo-polymères et copolymères de monooléfine qui répondent p. ex. à la formule CH₂ = CH - W dans laquelle W représente un atome d'hydrogène, un radical hydrocarboné substitué ou non ayant un nombre de carbone allant de 1 à 12.

A titre d'illustration de polyoléfine, on citera tout particulièrement les homo- et copolymères de l'éthylène, du propylène, du butène-1 et du méthyl-4 pentène-1.

Parmi ces polyoléfines, l'invention concerne particulièrement l'homopolymère de l'éthylène, l'homopolymère du propylène et les copolymères d'éthylène et de propylène ayant une proportion molaire d'éthylène comprise entre 0,5 et 30% en poids et de préférence entre 0,5 et 5%.

L'invention concerne tout particulièrement l'homopolymère du propylène ayant un indice de fusion (Melt Index : MI) au moins égal à 5 g/10 mn et de préférence compris entre 15 et 40 g/10 mn mesuré à 230°C sous 2,16 kg.

Aux trois constituants que sont le PVC, la polyoléfine et le terpolymère d'α-monooléfine greffé chlorure de vinyle, on peut éventuellement ajouter de faibles quantités d'autres composés du type stabilisant, agent antistatique, lubrifiant, plastifiant et d'autres composés polymériques.

Les constituants étant sous forme de poudre ou de granulés, la préparation de la composition est réalisée par exemple, en mélangeant à sec les granulés et/ou les poudres de polymères et le terpolymère d'α-monooléfine greffé chlorure de vinyle.

Ce mélange peut être effectué à température ambiante pendant une durée qui peut atteindre 1 heure.

Ce mélange à sec est avantageusement suivi d'un malaxage pour obtenir une bonne dispersion des constituants à une température comprise en général entre 170°C et 200°C.

Le mélange est ensuite moulé par injection à une température généralement de l'ordre de 170 à 200°C.

Les compositions conformes à l'invention présentent l'avantage d'avoir une meilleure processibilité, notamment dans le cas de l'injection moulage. La réduction des cycles d'injection, le faible retrait des pièces moulées permettent d'améliorer la productivité.

Les compositions conformes à l'invention présentent également un excellent comportement au feu.

Les exemples suivants illustrent l'invention.

### ESSAIS 1 à 4

**A)** Quatre mélanges sont réalisés à l'aide d'une extrudeuse type WERNER ZSK 30 à une température moyenne de 200°C pour les essais 1 et 2 et de 185°C pour les essais 3 et 4 avec les constituants ci-après selon des proportions indiquées dans le tableau 1 :
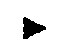 PVC
   - homopolymère du chlorure de vinyle obtenu par polymérisation en masse de valeur K (KW) égale à 57 et de granulométrie moyenne égale à environ 130 µm, essais 1, 2 et 4.
   - homopolymère du chlorure de vinyle de KW égal à 50 pour l'essai 3.
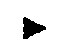 PP
   - homopolymère du propylène d'indice de fusion (Melt Index : MI) égal à 40 g/10 mn mesuré à 230°C sous 2,16 kg.
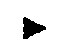 Terpolymère d'α-monooléfine greffé chlorure de vinyle (TPg)
   - terpolymère d'éthylène d'acrylate d'éthyle et d'anhydride maléique (72/25/3 % en poids) greffé chlorure de vinyle (7% en poids de chlore dans produit final).

**B)** Pour chacun des mélanges obtenus, on procède à une fracture cryogénique à une température où l'azote est liquide. On métallise l'échantillon à l'or (dépôt de 200 Å) à l'aide d'un pulvérisateur cathodique EDWARDS S150 SEM505 et mesure les paramètres morphologiques suivants :
- l'adhésion entre la phase dispersée et la matrice que l'on mesure par un nombre compris entre 0 et 3. Zéro correspond à une adhésion très mauvaise, la fracture se propage à l'interface nodule/matrice, la rupture est dite adhésive, les nodules sont parfaitement visibles ou peuvent être extraits de la matrice au moment de la rupture.

Trois : la rupture est dite cohésive, on ne peut distinguer les 2 phases.
- la morphologie (nodules/matrice)

Afin d'étudier la morphologie du mélange, on extrait la matrice à l'aide d'un solvant adéquat et observe au microscope électronique à balayage (MEB) la nature de la phase dispersée (qui peut se présenter sous forme de nodules, lamelles, fibres ou sous forme cocontinue ; on parle alors de morphologie nodulaire, lamellaire, fibrillaire ou cocontinue). Pour mesurer le diamètre des particules de la phase dispersée, on extrait ladite phase dispersée et procède à un rabotage à froid à environ -60°C de la surface de l'échantillon à l'aide d'un couteau de verre et observe alors l'échantillon au MEB. L'image obtenue est analysée à l'aide d'un analyseur d'images du type IBAS 2000 qui permet d'accéder aux diamètres des nodules.

**C)** Afin d'évaluer le comportement au feu des mélanges, on effectue l'essai de réaction au feu UL 94 selon la norme NFT 51072 sur des éprouvettes moulées, d'épaisseur égale à 3,2 mm.

Les résultats sont reportés dans le tableau 1.

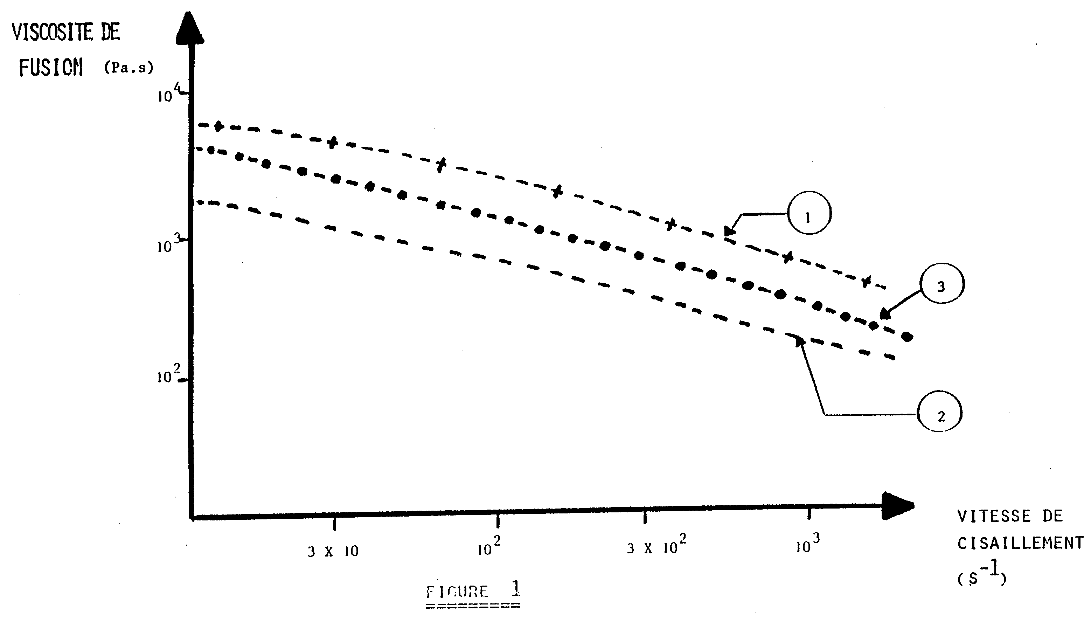

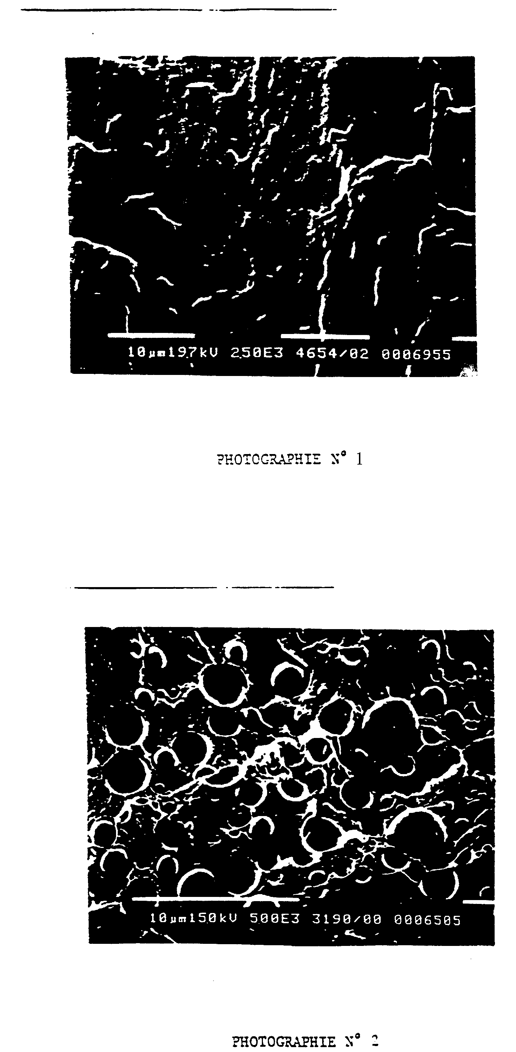

**D)** Nous avons mesuré la viscosité de fusion du PVC de KW 57 et des mélanges des essais 1 et 2, à 200°C sur un rhéomètre capillaire INSTRON type 3211. Les courbes rhéologiques sont reportées sur la figure 1.

La courbe (1) concerne le PVC de KW 57,

La courbe (2) concerne le mélange de l'essai 1 (90 parties en poids dePVC de KW 57 et 10 parties en poids de PP).

La courbe (3) concerne le mélange de l'essai 2 conforme à l'invention (90 parties en poids de PVC de KW 57, 10 parties en poids de PP et 10 parties en poids de TPg). On observe que l'introduction de 10 parties en poids de PP permet de baisser la viscosité de fusion du PVC quelle que soit la vitesse de cisaillement (courbes 2 et 3).

L'introduction de 10 parties de TPg au mélange PVC/PP - mélange de 'essai 2 conforme à l'invention - permet d'obtenir o tre l'abaissement de viscosité, une excellente adhésion en re phases (note égale à 3) alors que dans l'essai 1, l'adhésion entre les phases est nulle.

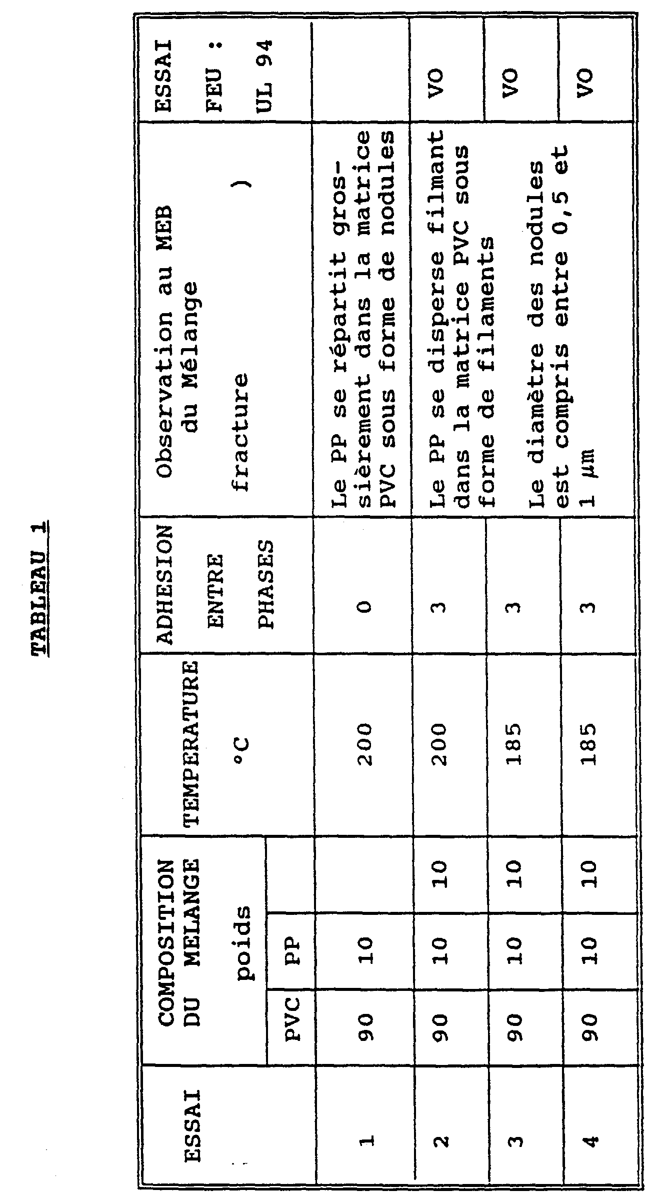

### ESSAIS 5 à 8

Quatre mélanges sont réalisés dans une cuve HAAKE à une température moyenne de 190°C avec une vitesse d'agitation égale à 60 t/mn pendant 6 mn avec les constituants ci-après selon des proportions indiquées dans le tableau 2 :
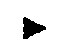 PVC
   - homopolymère du chlorure de vinyle obtenu par polymérisation en masse de KW 57 et de granulométrie moyenne égale à environ 130 µm.
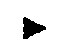 PP
   - identique à celui utilisé dans les essais 1 à 4.
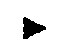 TPg
   - terpolymère identique à celui utilisé dans les essais 1 à 4.

Sur ces quatre mélanges, on mesure l'adhésion selon la méthode précédemment décrite.

Les résultats sont reportés dans le tableau 2.

**TABLEAU 2**

| ESSAI | COMPOSITION DU MELANGE (Parties en Poids) | | | TEMPERATURE | ADHESION ENTRE PHASES |
|---|---|---|---|---|---|
| | PVC | PP | | | |
| 5 | 70 | 30 | | 190 | 0 |
| 6 | 70 | 30 | 10 | 190 | 3 |
| 7 | 50 | 50 | 10 | 190 | 3 |
| 8 | 10 | 90 | 20 | 190 | 3 |

### ESSAI 9

Dans les mêmes conditions que les essais 5 à 8 on réalise un mélange contenant 90 parties en poids d'un PVC identique aux essais précédents, 10 parties en poids d'un homopolymère de l'éthylène de MI = 10 g/10 mn et 10 parties en poids de TPg identique aux essais précédents.

L'adhésion de l'échantillon mesuré comme précédemment décrit est égale à 3.

Les photographies annexées illustrent les différents aspects de l'invention et ont été obtenues à l'aide d'un microscope à balayage PHILIPS SEM 505.

La photographie 1 illustre au grossissement 2500 un grain du mélange conforme à l'invention.

La photographie 2 illustre au grossissement 5000 un grain de mélange PVC/PP sans terpolymère d'α-monooléfine greffé chlorure de vinyle.

## Revendications

1. Composition à base de polymère de chlorure de vinyle et de polyoléfine à propriétés rhéologiques améliorées caractérisée en ce qu'elle comprend au moins un polymère de chlorure de vinyle, au moins une polyoléfine et au moins un terpolymère d'α-monooléfine greffé pour du chlorure de vinyle.

2. Composition selon la revendication 1, caractérisée en ce qu'elle comprend :
- de 1 à 100 parties en poids de polymère de chlorure de vinyle,
- de 1 à 100 parties en poids de polyoléfine, choisie parmi un homopolymère ou un copolymère de monooléfine de formule CH₂ = CH - W dans laquelle W représente un atome d'hydrogène, un radical hydrocarboné, substitué ou non, ayant un nombre de carbones allant de 1 à 12.
- de 1 à 30 parties en poids de terpolymère d'α-monooléfine greffé par du chlorure de vinyle constitué d'un terpolymère tronc comprenant :
. 51 à 96 % en poids d'éthylène,
. 3 à 40 % en poids d'un acrylate ou méthacrylate d'alkyle ayant de 1 à 8 atomes de carbone et
. 1 à 9 % en poids d'un anhydride de diacide carboxylique insaturé et d'un greffon comprenant essentiellement un homo- ou copolymère du chlorure de vinyle.

3. Composition selon la revendication 2, caractérisée en ce que la proportion de terpolymère tronc dans le polymère greffé est au moins égale à 2 % et au plus égale à 98 % et de préférence comprise entre 60 et 95 %.

4. Composition selon la revendication 1 ou 2, caractérisée en ce que la quantité de comonomère polymérisable avec le chlorure de vinyle dans le greffon est au plus égale à 25 % en poids.

5. Composition selon la revendication 2, caractérisée en ce que le terpolymère d'α-monooléfine greffé par du chlorure de vinyle est un terpolymère d'éthylène, d'acrylate d'éthyle et d'anhydride maléique greffé chlorure de vinyle.

6. Composition selon la revendication 1 ou 2, caractérisée en ce que le polymère de chlorure de vinyle est un homopolymère ou copolymère du chlorure de vinyle obtenu par polymérisation en masse, en suspension, en émulsion, en microsuspension ou en émulsion suspendue.

7. Composition selon la revendication 6, caractérisée en ce que le monomère copolymérisable avec le chlorure de vinyle est l'acétate de vinyle, le chlorure de vinylidène, l'acrylonitrile, le trifluorochloroéthylène et/ou les esters des acides acrylique, fumarique, maléique et/ou itaconique.

8. Composition selon la revendication 6, caractérisée en ce que le polychlorure de vinyle est l'homopolymère du chlorure de vinyle.

9. Composition selon la revendication 2, caractérisée en ce que la polyoléfine est un homopolymère du propylène.

10. Composition selon la revendication 2, caractérisée en ce que la polyoléfine est un homopolymère de l'éthylène.

11. Procédé de préparation des compositions des revendications 1 à 10 par mélangeage à l'état fondu des différents constituants.

12. Utilisation des compositions des revendications 1 à 10 pour la fabrication d'objets moulés par injection moulage.

## Patentansprüche

1. Zusammensetzung auf der Basis eines Polymers von Vinylchlorid und Polyolefin mit verbesserten rheologischen Eigenschaften, dadurch gekennzeichnet, daß sie mindestens ein Vinylchloridpolymer, mindestens ein Polyolefin und mindestens ein mit Vinylchlorid gepfropftes Terpolymer eines α-Monoolefins enthält.

2. Zusammensetzung nach Anspruch 1, dadurch gekennzeichnet, daß sie enthält:
- 1 bis 100 Gewichtsteile Vinylchloridpolymer,
- 1 bis 100 Gewichtsteile Polyolefin, das unter Homopolymeren und Copolymeren eines Monoolefins der Formel CH₂ = CH - W ausgewählt ist, wobei W Wasserstoff oder eine Kohlenwasserstoffgruppe, die substituiert oder unsubstituiert ist, mit 1 bis 12 Kohlenstoffatomen bedeutet, und
- 1 bis 30 Gewichtsteile mit Vinylchlorid gepfropftes Terpolymer eines Monoolefins, das aus einem Terpolymer als Pfropfgrundlage, das
· 51 bis 96 Gew.-% Ethylen,
· 3 bis 40 Gew.-% Alkylacrylat oder Alkylmethacrylat, wobei die Alkylgruppe 1 bis 8 Kohlenstoffatome aufweist, und
· 1 bis 9 Gew.-% Anhydrid einer ungesättigten Dicarbonsäure enthält,
und Pfropfzweigen besteht, die im wesentlichen ein Homo- oder Copolymer von Vinylchlorid enthalten.

3. Zusammensetzung nach Anspruch 2, dadurch gekennzeichnet, daß der Mengenanteil des Terpolymers als Pfropfgrundlage in dem gepfropften Polymer mindestens 2 % und höchstens 98 % beträgt und vorzugsweise im Bereich von 60 bis 95 % liegt.

4. Zusammensetzung nach Anspruch 1 oder 2, dadurch gekennzeichnet, daß der Anteil des mit dem Vinylchlorid polymerisierbaren Comonomers in den Pfropfzweigen höchstens 25 Gew.-% beträgt.

5. Zusammensetzung nach Anspruch 2, dadurch gekennzeichnet, daß das mit Vinylchlorid gepfropfte α-Monoolefin-Terpolymer ein Terpolymer von Ethylen, Ethylacrylat und Maleinsäureanhydrid ist, das mit Vinylchlorid gepfropft ist.

6. Zusammensetzung nach Anspruch 1 oder 2, dadurch gekennzeichnet, daß das Vinylchloridpolymer ein Homopolymer oder Copolymer von Vinylchlorid ist, das durch Massepolymerisation, Suspensionspolymerisation, Emulsionspolymerisation, Mikrosuspensionspolymerisation oder Polymerisation suspendierter Emulsion hergestellt ist.

7. Zusammensetzung nach Anspruch 6, dadurch gekennzeichnet, daß das mit Vinylchlorid copolymerisierbare Monomer Vinylacetat, Vinylidenchlorid, Acrylonitril, Trifluorchlorethylen und/oder ein Ester von Acrylsäure, Fumarsäure, Maleinsäure und/oder Itaconsäure ist.

8. Zusammensetzung nach Anspruch 6, dadurch gekennzeichnet, daß das Polyvinylchlorid ein Homopolymer von Vinylchlorid ist.

9. Zusammensetzung nach Anspruch 2, dadurch gekennzeichnet, daß das Polyolefin ein Homopolymer von Propylen ist.

10. Zusammensetzung nach Anspruch 2, dadurch gekennzeichnet, daß das Polyolefin ein Homopolymer von Ethylen ist.

11. Verfahren zur Herstellung von Zusammensetzungen nach den Ansprüchen 1 bis 10 durch Mischen der verschiedenen Bestandteile im geschmolzenen Zustand.

12. Verwendung der Zusammensetzungen nach den Ansprüchen 1 bis 10 zur Herstellung von Formteilen durch Spritzgießen.

## Claims

1. Composition based on vinyl chloride polymer and on polyolefin with improved rheological properties, characterized in that it comprises at least one vinyl chloride polymer, at least one polyolefin and at least one α-monoolefin terpolymer grafted with vinyl chloride.

2. Composition according to Claim 1, characterized in that it comprises:
- from 1 to 100 parts by weight of vinyl chloride polymer,
- from 1 to 100 parts by weight of polyolefin chosen from a homopolymer or a copolymer of monoolefin of formula CH₂=CH-W in which W denotes a hydrogen atom or an optionally substituted hydrocarbon radical which has a number of carbons ranging from 1 to 12,
- from 1 to 30 parts by weight of α-monoolefin terpolymer grafted with vinyl chloride, consisting of a backbone terpolymer comprising:
51 to 96 % by weight of ethylene,
3 to 40 % by weight of an alkyl acrylate or methacrylate, the alkyl containing from 1 to 8 carbon atoms, and
1 to 9 % by weight of an unsaturated dicarboxylic acid anhydride and of a graft essentially comprising a vinyl chloride homo- or copolymer.

3. Composition according to Claim 2, characterized in that the proportion of backbone terpolymer in the grafted polymer is not less than 2 % and not more than 98 % and preferably between 60 and 95 %.

4. Composition according to Claim 1 or 2, characterized in that the quantity of comonomer polymerizable with the vinyl chloride in the graft is not more than 25 % by weight.

5. Composition according to Claim 2, characterized in that the α-monoolefin terpolymer grafted with vinyl chloride is a vinyl chloride-grafted terpolymer of ethylene, ethyl acrylate and maleic anhydride.

6. Composition according to Claim 1 or 2, characterized in that the vinyl chloride polymer is a vinyl chloride homopolymer or copolymer obtained by polymerization in bulk, in suspension, in emulsion, in microsuspension or in suspended emulsion.

7. Composition according to Claim 6, characterized in that the monomer copolymerizable with vinyl chloride is vinyl acetate, vinylidene chloride, acrylonitrile, chlorotrifluoroethylene and/or the esters of acrylic, fumaric, maleic and/or itaconic acids.

8. Composition according to Claim 6, characterized in that the polyvinyl chloride is the vinyl chloride homopolymer.

9. Composition according to Claim 2, characterized in that the polyolefin is a propylene homopolymer.

10. Composition according to Claim 2, characterized in that the polyolefin is an ethylene homopolymer.

11. Process for the preparation of the compositions of Claims 1 to 10 by mixing the various constituents in the molten state.

12. Use of the compositions of Claims 1 to 10 for the manufacture of moulded objects by injection moulding.
